# EUROPÄISCHE PATENTSCHRIFT

(11) **EP 2 979 750 B1**
(45) Veröffentlichungstag und Bekanntmachung des Hinweises auf die Patenterteilung: **31.05.2017**
(21) Anmeldenummer: 15172705.4
(22) Anmeldetag: 18.06.2015
(51) Int. Cl.: B01F 3/04, B01F 5/06, F01N 3/20, F01N 3/28

(54) **MISCHER UND MISCHEINRICHTUNG FÜR EINE ABGASANLAGE**
MIXER AND MIXING TOOL FOR AN EXHAUST GAS SYSTEM
MÉLANGEUR ET DISPOSITIF DE MÉLANGE POUR UNE INSTALLATION DE GAZ D'ÉCHAPPEMENT

(30) Priorität: 31.07.2014 DE 102014215083
(43) Veröffentlichungstag der Anmeldung: 03.02.2016
(73) Patentinhaber: Eberspächer Exhaust Technology GmbH & Co. KG, 66539 Neunkirchen (DE)
(72) Erfinder: Kobe, Jürgen, 72622 Nürtingen-Raidwangen (DE); Hackländer, Felix, 73733 Esslingen (DE); Binder, David, 73730 Esslingen (DE); Berkemer, Frank, 72800 Eningen u.A. (DE)
(74) Vertreter: RLTG

(56) Entgegenhaltungen:
- EP-A1- 1 099 469
- EP-A1- 1 754 530
- DE-A1-102011 111 765

## Beschreibung

Die vorliegende Erfindung betrifft einen Mischer für eine Abgasanlage zum Durchmischen und/oder Verdampfen einer Flüssigkeit in einem Abgasstrom, insbesondere für ein SCR-System, mit den Merkmalen des Oberbegriffs des Anspruchs 1. Die Erfindung betrifft außerdem eine mit einem solchen Mischer ausgestattete Mischeinrichtung für eine Abgasanlage.

Für eine Reihe von Anwendungen ist es erforderlich, in einem Gasstrom eine Flüssigkeit zu Verdampfen und die verdampfte Flüssigkeit mit dem Gasstrom zu vermischen. Bei Abgasanlagen von Brennkraftmaschinen kommt bspw. das Einbringen eines flüssigen Kraftstoffs in den Abgasstrom in Betracht, z.B. um mit Hilfe eines nachfolgenden Katalysators eine Temperaturerhöhung in der Abgasanlage zu bewirken. Ferner sind SCR-Systeme bekannt, bei denen ein Reduktionsmittel stromauf eines SCR-Katalysators in den Abgasstrom eingebracht wird, wobei SCR für Selective Catalytic Reduction steht. Das Reduktionsmittel wird dabei bevorzugt in flüssiger Form eingebracht und muss bis zum SCR-Katalysator möglichst weitgehend verdampft und möglichst homogen mit dem Abgasstrom durchmischt sein. Typischerweise kommt als Reduktionsmittel eine wässrige Harnstofflösung in Betracht. Durch Thermolyse und anschließende Hydrolyse kann dabei der Harnstoff mit Wasser in Ammoniak und Kohlendioxid umgewandelt werden. Im SCR-Katalysator lässt sich damit dann eine Reduktion von Stickoxyden zu Stickstoff und Wasser erzielen.

Um die Verdampfung und Durchmischung der jeweiligen Flüssigkeit in der jeweiligen Gasströmung zu verbessern, kommen Mischer bzw. Mischeinrichtungen der eingangs genannten Art zum Einsatz.

Aus der DE 10 2011 111 765 A1 ist ein Mischer bekannt, der mehrere sternförmig angeordnete Leitschaufeln aufweist. Sämtliche Leitschaufeln sind dabei separate Blechformkörper, die sternförmig in einen zylindrischen Haltering eingesetzt sind und radial außen mit dem Haltering verschweißt sind. Radial innen sind alle Leitschaufeln über eine zentrale Schweißstelle miteinander verbunden. Der Aufwand zum Herstellen eines derartigen Mischers ist vergleichsweise groß, da eine Vielzahl von Einzelteilen zusammengebaut und gefügt werden muss.

Die EP 1 754 530 A1 offenbart einen Mischer gemäß dem Oberbegriff des Anspruchs 1 mit einem zentral angeordneten Kern und damit integral ausgebildeten und sternförmig davon abstehenden Leitschaufeln.

Die vorliegende Erfindung beschäftigt sich mit dem Problem, für einen Mischer der vorstehend genannten Art bzw. für eine damit ausgestattete Mischeinrichtung eine verbesserte Ausführungsform anzugeben, die sich insbesondere vergleichsweise einfach herstellen lässt.

Diese Aufgabe wird durch einen Mischer gemäß Anspruch 1 gelöst.

Die Erfindung beruht auf dem allgemeinen Gedanken, den Mischer mit all seinen Leitschaufeln als einteiliges Gussteil herzustellen. Die materialeinheitliche Herstellung des alle Leitschaufeln umfassenden Gussteils aus einem Stück reduziert den Herstellungsaufwand, da eine aufwendige Montage mehrerer Einzelteile entfällt. Um ein derartiges Gussteil mit integral daran ausgeformten Leitschaufeln herstellen zu können, schlägt die Erfindung ferner vor, den Mischer mit einem zentralen Kern auszustatten, von dem alle Leitschaufeln stemförmig ausgehen. Somit sind alle Leitschaufeln radial innen mit besagtem Kern verbunden. Durch das Vorsehen eines derartigen Kerns ist es möglich, ein Spritzgusswerkzeug bereitzustellen, mit dessen Hilfe der Mischer
spritzformbar ist und das vergleichsweise einfach entformbar ist.

Erfindungsgemäß ist zumindest bei einer der Leitschaufeln eine Abströmkante an einem Endbereich ausgebildet, die gegenüber einem stromauf daran anschließenden Bereich der jeweiligen Leitschaufel abgewinkelt ist. Dieser Endbereich weist einen kleineren Anstellwinkel auf, als der stromauf daran anschließende Bereich der Leitschaufel. Es hat sich gezeigt, dass ein derartiger entgegengesetzt abgewinkelter Endbereich vorteilhaft hinsichtlich der Durchmischung der Strömung und/oder der Durchströmung des Mischers ist.

Ferner kann auf einen die Leitschaufeln einfassenden Haltering oder dergleichen verzichtet werden. Entsprechend einer vorteilhaften Ausführungsform können die Leitschaufeln radial außen freistehend angeordnet sein. Auch diese Maßnahme führt zu einer extremen Vereinfachung hinsichtlich der Herstellbarkeit des spritzgeformten Mischers, da ein zugehöriges Spritzwerkzeug aufgrund der radial außen freistehenden Leitschaufeln besonders einfach, bspw. radial, entformbar ist.

Gemäß einer anderen Ausführungsform kann der Kern einen Durchmesser aufweisen, der größer ist als eine Wandstärke der Leitschaufeln. Hierdurch besitzt der Kern eine vergleichsweise große Masse und dementsprechend eine relativ hohe Wärmekapazität. Hierdurch kann die Verdampfungsleistung der Leitschaufeln für darauf auftreffende Flüssigkeit verbessert werden, da vom Kern vergleichsweise viel Wärme nachgeführt werden kann. Beispielsweise ist der Durchmesser des Kerns mindestens zwei Mal oder mindestens vier Mal größer als die Wandstärke einer Leitschaufel. Zweckmäßig sind sämtliche Leitschaufeln identisch ausgestaltet.

Bei einer anderen Ausführungsform können die Leitschaufeln jeweils über ihre gesamte axiale Länge mit dem Kern verbunden sein. Hierdurch ist eine besonders günstige Wärmeübertragung zwischen Kern und Leitschaufeln gegeben. Desweiteren vereinfacht sich das Spritzformen des Gussteils.

Eine andere Ausführungsform geht davon aus, dass der Kern an wenigstens einem Axialende des Mischers axial über die Leitschaufeln vorsteht. Insbesondere kann der Kern an der Anströmseite über die Leitschaufeln, also über deren Anströmkanten axial vorstehen. Diese Bauform hat aerodynamische Vorteile und reduziert den Durchströmungswiderstand des Mischers. Der axial anströmseitig überstehende Bereich des Kerns kann insbesondere aerodynamisch profiliert sein, bspw. tropfenförmig oder halbkugelförmig oder kegelförmig.

Bei einer anderen vorteilhaften Ausführungsform kann ein anströmseitiger Ring vorgesehen sein, der mit allen Leitschaufeln an deren Anströmkante verbunden ist. Der anströmseitige Ring führt zu einer intensiven Aussteiffung bzw. Stabilisierung der Leitschaufeln, wodurch der Mischer insgesamt eine höhere Stabilität besitzt. Der anströmseitige Ring ist insbesondere dann von Vorteil, wenn die Leitschaufeln im Übrigen radial freistehend angeordnet sind. Der anströmseitige Ring befindet sich dabei distal zum Kern und vorzugsweise im Bereich eines Außenumfangs des Mischers. Insbesondere ist der anströmseitige Ring im Bereich radial außen liegender Enden der Leitschaufeln anströmseitig angeordnet. Dabei kann der anströmseitige Ring bündig zu Anströmkanten der Leitschaufeln angeordnet sein.

Dieser anströmseitige Ring führt außerdem zu einem reduzierten Durchströmungswiderstand des Mischers, wobei es für diese Wirkung nicht darauf ankommt, ob der anströmseitige Ring integral am Gussteil ausgebildet ist oder ob der anströmseitige Ring mit allen Leitschaufeln verbunden ist oder ob ein Kern vorhanden ist oder ob die Leitschaufeln an einem Gussteil ausgebildet sind. Demnach charakterisiert sich eine andere Lösung der hier vorgestellten Erfindung dadurch, dass der mehrere, sternförmig angeordnete Leitschaufeln aufweisende Mischer einen anströmseitigen Ring aufweist, der im Bereich von Anströmkanten der Leitschaufeln und im Bereich eines Außenumfangs des Mischers angeordnet ist. Dabei kann optional vorgesehen sein, dass die Leitschaufeln jeweils radial innen mit einem zentral angeordneten Kern verbunden sind. Ferner kann zusätzlich oder alternativ vorgesehen sein, dass der anströmseitige Ring und die Leitschaufeln, sowie optional der Kern, durch ein integrales Gussteil gebildet sind.

Entsprechend einer vorteilhaften Weiterbildung kann der anströmseitige Ring integral am Gussteil ausgebildet sein. Insofern ist auch der anströmseitige Ring materialeinheitlich mit den Leitschaufeln und dem Kern im Gussteil ausgeformt.

Bei einer anderen Weiterbildung kann der anströmseitige Ring quer zur Umfangsrichtung ein Profil besitzen, das anströmseitig und abströmseitig gerundet ist und anströmseitig einen größeren Rundungsradius aufweist als abströmseitig. Hierdurch ergibt sich eine aerodynamische Konturierung für den anströmseitigen Ring im Profil, die zur Reduzierung des Durchströmungswiderstands des Mischers genutzt werden kann. Insbesondere kann das Querschnittsprofil als Tropfenprofil oder Tragflügelprofil konzipiert sein.

Besonders zweckmäßig ist dabei eine Ausführungsform, bei weicher das Querschnittsprofil des anströmseitigen Rings so gewählt ist, dass es eine den anströmseitigen Ring umströmende Gasströmung radial nach innen ablenkt. Es hat sich gezeigt, dass eine derartige Ablenkung der Randströmung radial nach innen den Durchströmungswiderstand des Mischers signifikant reduziert.

Gemäß einer anderen vorteilhaften Ausführungsform kann ein abströmseitiger Ring vorgesehen sein, der mit allen Leitschaufeln an deren Abströmkante verbunden ist. Insbesondere kann dieser abströmseitige Ring radial außen am Mischer angeordnet sein, also im Bereich eines Außenumfangs des Mischers, sowie im Bereich der Abströmkanten der Leitschaufeln. Der abströmseitige Ring verbleibt dabei ebenso wie der anströmseitige Ring vorzugsweise innerhalb der radial außen liegenden Enden oder Spitzen der Leitschaufeln. Der abströmseitige Ring kann abströmseitig bündig mit Abströmkanten der Leitschaufeln abschließen. Der abströmseitige Ring kann in das Gussteil materialeinheitlich integriert sein. Ein derartiger abströmseitiger Ring kann ebenfalls zu einer Stabilisierung des Mischers bzw. der Leitschaufeln führen.

Bei einer anderen vorteilhaften Ausführungsform können am Gussteil Halteelemente ausgebildet sein, vorzugsweise integral, über die der Mischer z.B. mittels eines separaten Halters an einem Abgasrohr befestigbar ist. Durch die Integration derartiger Halteelemente in das Gussteil vereinfacht sich die Montage des Mischers in einem Abgasrohr, wobei ein hierzu speziell vorgesehener Halter zum Einsatz kommen kann.

Die zuvor genannten Halteelemente können z.B. an einzelnen Leitschaufeln ausgebildet sein. Ebenso ist es möglich, die Halteelemente gemäß einer vorteilhaften Ausführungsform an dem zuvor genannten anströmseitigen Ring auszubilden, wodurch es möglich ist, die Halteelemente unabhängig von den Leitschaufeln in der Umfangsrichtung zu positionieren.

Bevorzugt ist eine Ausführungsform, bei welcher das jeweilige Halteelement mit einer am Halter ausgebildeten Haltelasche durch eine mittels eines Schweißverfahrens, vorzugsweise mttels eines Laserschweißverfahrens, hergestellten Schweißnaht fest verbunden ist. Hierzu kann an der Haltelasche eine Aussparung vorgesehen, in welche das Halteelement formschlüssig einsetzbar ist. Die Aussparung kann hierzu einen U-förmigen Querschnitt aufweisen, der komplementär zum Querschnitt des Halteelements geformt ist. Zum Beispiel kann es sich hierbei um einen Rechteckquerschnitt handeln, der von einem Rand der Aussparung an drei von vier Seiten eingefasst ist. Mittels eines Schweißvorgangs kann nun entlang des Rands der Aussparung eine durchgehende Schweißnaht erzeugt werden, um das Halteelement mit der Haltelasche zu verbinden. Besonders vorteilhaft hat sich hierbei die Verwendung eines Laserschweißverfahrens herausgestellt, um die jeweilige Schweißnaht herzustellen.

Zur vereinfachten Herstellung der Schweißverbindung kann vorgesehen sein, dass der Halter für das jeweilige Halteelement eine Haltelasche aufweist, an der eine Aussparung ausgebildet ist, in weiche das Halteelement eingesetzt ist. Besonders vorteilhaft ist es dabei, wenn zwischen dem Halteelement und der Haltelasche in der Aussparung ein möglichst kleiner Spalt bzw. ein möglichst geringes Spiel entlang des Rands der Aussparung vorhanden ist. Bevorzugt ist daher eine Ausführungsform, bei welcher das Halteelement spielfrei bzw. spaltfrei in die Aussparung eingreift, so dass der Rand der Aussparung im Wesentlichen vollständig am Halteelement anliegt. Zum Beispiel kann dann der Rand der Aussparung bei einem Rechteckquerschnitt an drei Seiten am Halteelement anliegen.
Ein spielfreier Eingriff des Halteelements in die Aussparung läßt sich vorteilhaft dadurch erreichen, dass die Aussparung mit enger Toleranz hergestellt wird und dass dabei eine Entformungsschräge des Gussteils im Bereich des Halteelements berücksichtigt wird. Somit lässt sich das Halteelement einfach soweit in die Aussparung einführen, bis es entlang des Rands der Aussparung an der Haltelasche anliegt. Die Entformungsschräge wirkt dabei als Zentrierung. Der spielfreie Eingriff des Halteelements in die Aussparung ermöglicht in Verbindung mit einem Laserschweißverfahren eine besonders hochwertige und einfach herstellbare Verbindung zwischen Halteelement und Haltelasche.
Ferner kann ein erfindungsgemäßer Mischer so ausgestaltet sein, dass wenigstens eine der
Leitschaufeln eine Zusatzleitkontur aufweist, die an einer Abströmfläche der jeweiligen Leitschaufel im Bereich einer Anströmkante der jeweiligen Leitschaufel angeordnet ist und eine Strömungsablenkung in Richtung einer Anströmfläche der in Umfangsrichtung benachbarten Leitschaufel bewirkt. Hierzu steht die jeweilige Zusatzleitkontur zweckmäßig von der jeweiligen Leitschaufel in Richtung einer der benachbarten Leitschaufeln ab und besitzt eine spoilerartige oder rampenförmige oder keilförmige Struktur. Sofern mehrere Leitschaufeln mit jeweils einer solchen Zusatzleitkontur ausgestattet sind, stehen diese in der Umfangsrichtung jeweils an derselben Seite von den Leitschaufeln ab, also entweder jeweils im Uhrzeigersinn oder alternativ im Gegenuhrzeigersinn. Mithilfe der Zusatzieitkonturen wird erreicht, dass das regelmäßig zentral eingebrachte flüssige Reaktionsmittel gegen die großen anströmseitigen Flächen der Leitschaufeln umgelenkt wird und daran einen Niederschlag bildet, der von der ankommenden Abgasströmung leicht verdampft werden kann.

Besonders vorteilhaft ist eine Ausführungsform, bei der die jeweilige Zusatzleitkontur nur in einem radial innenliegenden Bereich der jeweiligen Leitschaufel angeordnet ist. Es hat sich gezeigt, dass in den radial außenliegenden Bereichen der jeweiligen Leitschaufel eine derartige Umlenkung
nicht erforderlich ist, um eine hinreichende Verdampfung zu erzielen, was auf den radial innen deutlich geringeren Volumenstrom der Abgasströmung zurückgeführt wird. Durch die Anordnung der Zusatzleitkonturen nur radial innen wird der Durchströmungswiderstand des Mischers reduziert.

Eine erfindungsgemäße Mischeinrichtung, die sich für die Montage in einer Abgasanlage, insbesondere in Verbindung mit einem SCR-System eignet, umfasst ein Abgasrohr, dessen Innenwand eine von einem Abgasstrom durchströmbaren Querschnitt radial begrenzt, einen Mischer der vorstehend genannten Art sowie einen separaten Halter, mit dem der Mischer am Abgasrohr befestigt ist. Somit sind letztlich nur drei Bauteile vorgesehen, nämlich Abgasrohr, Mischer und Halter, die sich besonders einfach montieren lassen.

Gemäß einer vorteilhaften Ausführungsform kann der Mischer derart mit dem Halter am Abgasrohr befestigt sein, dass ein Ringspalt radial zwischen dem Mischer und der Innenwand ausgebildet ist. Es hat sich gezeigt, dass ein derartiger Ringspalt aus aerodynamischer Sicht besonders vorteilhaft ist, wodurch die Mischeinrichtung insgesamt einen reduzierten Strömungswiderstand besitzt. Der zuvor genannte Ringspalt kann dabei radial zwischen der Innenwand und radial außenliegenden Enden oder Spitzen der Leitschaufeln und/oder dem zuvor genannten anströmseitigen bzw. abströmseitigen Ring ausgebildet sein. Durch den Ringspalt wird ferner gewährleistet, dass der Mischer keinen direkten Kontakt zum Abgasrohr besitzt. Vielmehr erfolgt lediglich eine mittelbare Positionierung des Mischers im Abgasrohr mit Hilfe des Halters. Hierdurch ist der Mischer gegenüber dem Abgasrohr weitgehend thermisch isoliert, was die Effizienz des Mischers hinsichtlich der Verdampfungswirkung verbessert.

Der Halter kann Haltelaschen aufweisen, die mit Halteelementen zusammenwirken, die am Mischer vorgesehen sind. Die Haltelaschen können dabei mit den Halteelementen verrastet sein. Ebenso sind hier Schweißverbindungen denkbar. Ferner können die Haltelaschen mit den Halteelementen verpresst sein, derart, dass durch plastische Verformung ein ausreichender Kraftschluss und/oder Formschluss entsteht.

Der Halter kann zweckmäßig so ausgestaltet sein, dass er für die Montage der Mischeinrichtung in eine Flanschverbindung eingesetzt werden kann, mit der das Abgasrohr an eine andere Komponente der Abgasanlage anschließbar ist. Somit entfällt eine separate Fixierung des Halters am Abgasrohr, was die Montage der Mischeinrichtung erheblich vereinfacht.

Ein nicht erfindungsgemäßes Verfahren zum Herstellen einer Mischeinrichtung für eine Abgasanlage, charakterisiert sich dadurch, dass der Mischer als Gussteil aus einem metallischen Gusswerkstoff ausgestaltet wird, wobei das Gussteil zumindest ein integral daran ausgeformtes Halteelement aufweist, dass der Halter als Blechteil aus einem metallischen Blechwerkstoff ausgestaltet wird, wobei das Blechteil zumindest eine integral daran ausgeformte Haltelasche aufweist, dass das Gussteil und der Halter relativ zueinander so positioniert werden, dass das jeweilige Halteelement in die jeweiligen Haltelasche eingreift, und dass das jeweilige Halteelement mit der jeweiligen Haltelasche verschweißt wird, derart, dass der Gusswerkstoff aufschmilzt und sich direkt mit dem Blechwerkstoff verbindet. Durch diese Vorgehensweise kann somit auf einen Schweißzusatzwerkstoff verzichtet werden, da sich der Gusswerkstoff unmittelbar mit dem Blechwerkstoff verbindet. Hierdurch vereinfacht sich der Schweißvorgang. Außerdem lässt er sich preiswerter realisieren. Geeignete Schweißverfahren sind z.B. ein Laserschweißverfahren sowie ein WIG-Schweißverfahren, wobei WIG für Wolfram-Inert-Gas steht.

Das hier vorgestellte Verfahren eignet sich somit in besonderer Weise für die Herstellung einer Mischeinrichtung der vorstehend beschriebenen Art, in der ein Mischer der vorstehend beschriebenen Art zum Einsatz kommt. Im Allgemeinen lässt sich dieses Herstellungsverfahren jedoch auch unabhängig von der vorstehend vorgestellten erfindungsgemäßen Mischeinrichtung und/oder unabhängig vom vorstehend vorgestellten erfindungsgemäßen Mischer verwenden, solange die Mischeinrichtung ein Abgasrohr, dessen Innenwand einen von einem Abgasstrom durchströmbaren Querschnitt radial begrenzt, einen Mischer zum Durchmischen und/oder Verdampfen einer Flüssigkeit im Abgasstrom und einen separaten Halter zum Fixieren des Mischers am Abgasrohr aufweist.

Vorteilhaft erfolgt die Positionierung von Gussteil und Halter derart, dass sich das jeweilige Halteelement und die jeweilige Haltelasche entlang einer Kontaktzone berühren, entlang der sich dann eine Schweißnaht herstellen lässt.

Insbesondere kann das jeweilige Halteelement nach dem Positionieren entlang der Kontaktzone mit einer Außenseite an einer Innenseite der Haltelasche spielfrei anliegen. Besonders vorteilhaft ist hierbei eine Ausführungsform, bei welcher das jeweilige Halteelement in eine Aussparung der Haltelasche formschlüssig und spielfrei eingreift.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine mit einer Abgasanlage, die eine Mischeinrichtung enthält,
- Fig. 2: eine isometrische Ansicht eines Mischers der Mischeinrichtung,
- Fig. 3: eine isometrische Ansicht des Mischers, jedoch bei einer anderen Ausführungsform,
- Fig. 4: eine Axialansicht des Mischers mit einem Halter der Mischeinrichtung,
- Fig. 5: ein vergrößertes Detail V aus Fig. 4,
- Fig. 6: einen Längsschnitt des Mischers im Bereich eines anströmseitigen Rings gemäß Schnittlinien VI in Fig. 5,
- Fig. 7: eine isometrische Ansicht des Mischers bei einer weiteren Ausführungsform.

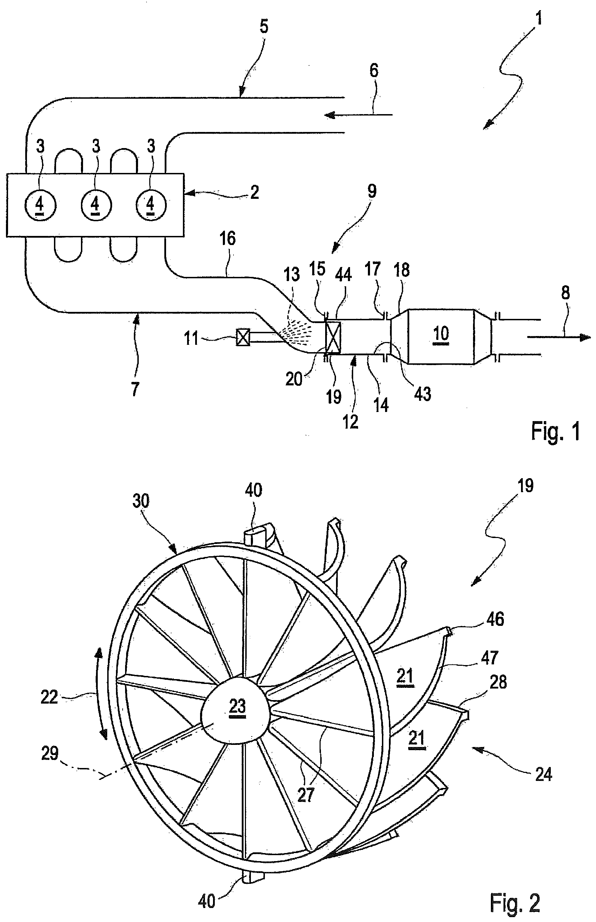

Entsprechend Fig. 1 umfasst eine Brennkraftmaschine 1, die bevorzugt in einem Kraftfahrzeug zur Anwendung kommt, einen Motorblock 2, der in mehreren Zylindern 3 je einen Brennraum 4 enthält, wobei in den Zylindern 3 hier nicht gezeigte Kolben hubverstellbar angeordnet sind. Die Brennkraftmaschine 1 umfasst ferner eine Frischluftanlage 5 zum Zuführen von Frischluft zu den Brennräumen 4. Ein entsprechender Frischluftstrom 6 ist durch einen Pfeil angedeutet. Außerdem ist die Brennkraftmaschine 1 mit einer Abgasanlage 7 ausgestattet, die zum Abführen von Abgas von den Brennräumen 4 dient, wobei ein Abgasstrom 8 durch einen Pfeil angedeutet ist. Die Abgasanlage 7 ist hier mit einem SCR-System 9 ausgestattet, das einen SCR-Katalysator 10, einen Injektor 11 und eine Mischeinrichtung 12 umfasst. Mit Hilfe des Injektors 11 kann ein geeignetes Reduktionsmittel 13 in flüssiger Form in den Abgasstrom 8 eingedüst werden. Bezüglich einer Strömungsrichtung des Abgases in der Abgasanlage 7 ist die Mischeinrichtung 12 stromab des Injektors 11 und stromauf des SCR-Katalysators 10 angeordnet. Die Mischeinrichtung 12 dient zum Durchmischen und/oder Verdampfen des Reduktionsmittels 12 im Abgasstrom 8. Im SCR-Katalysator 10 findet dann eine Reduktion von im Abgasstrom 8 mitgeführten Stickoxyden mit Hilfe des Reduktionsmittels statt.

Die Mischeinrichtung 12 umfasst ein Abgasrohr 14, das bspw. über eine erste Flanschverbindung 15 mit einem Rohrstück 16 der Abgasanlage 7 verbunden ist, an dem der Injektor 11 angeordnet ist. Mit einer zweiten Flanschverbindung 17 ist das Abgasrohr 14 mit einem Gehäuse 18 des SCR-Katalysators 10 verbunden. Die Mischeinrichtung 12 umfasst ferner einen Mischer 19 der im Wesentlichen das Durchmischen und/oder Verdampfen des Reduktionsmittels 13 im Abgasstrom 8 bewirkt. Desweiteren ist ein Halter 20 vorgesehen, mit dessen Hilfe der Mischer 19 am Abgasrohr 14 befestigt ist. Im Beispiel der Fig. 1 ist der Halter 20 in die erste Flanschverbindung 15 eingesetzt, so dass beim Festlegen des Abgasrohrs 14 am Rohrstück 16 gleichzeitig auch der Halter 20 am Abgasrohr 14 festgelegt wird.

Gemäß den Fig. 2 bis 7 besitzt der Mischer 19 mehrere Leitschaufeln 21, die sternförmig angeordnet sind und dementsprechend in einer Umfangsrichtung 22 verteilt angeordnet sind. Der Mischer 19 umfasst ferner einen zentral angeordneten Kern 23, von dem die Leitschaufeln 21 ausgehen. Dementsprechend sind die Leitschaufeln 21 jeweils radial innen mit dem Kern 23 verbunden. Desweiteren charakterisiert sich der Mischer 19 durch ein Gussteil 24, das sämtliche Leitschaufeln 21 und den Kern 23 als integrale Bestandteile aufweist. Das bedeutet, dass der Kern 23 und alle Leitschaufeln 21 aus einem Stück hergestellt sind und gemeinsam ein materialeinheitliches Bauteil, nämlich das Gussteil 24 bilden.

Sämtliche Leitschaufeln 21 sind vorzugsweise baugleich bzw. formidentisch ausgebildet. Ferner sind die Leitschaufeln 21 hier radial außen freistehend angeordnet. Auf diese Weise kann der Abgasstrom 8 die Leitschaufeln 21 radial außen umströmen.

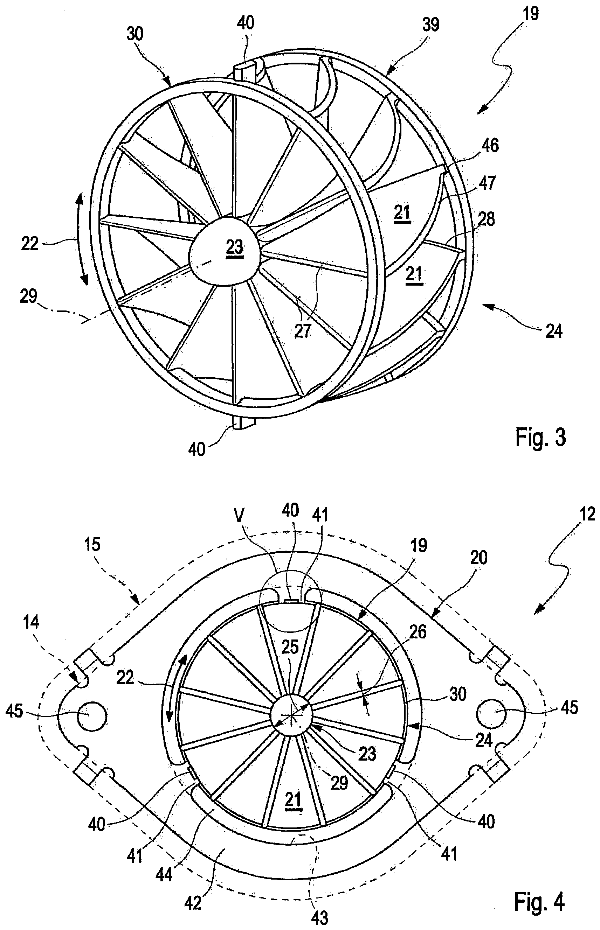

Gemäß Fig. 4 besitzt der Kern 23 einen Durchmesser 25, der größer ist als eine Wandstärke 26 der jeweiligen Leitschaufel 21. Im Beispiel ist der Durchmesser 25 etwa fünf Mal größer als die Wandstärke 26. Somit besitzt der Kern 23 im Vergleich zu den Leitschaufeln 21 eine vergleichsweise große Masse und dementsprechend eine relativ hohe Wärmekapazität.

Die Leitschaufeln 21 sind zweckmäßig über ihre gesamte axiale Länge radial innen mit dem Kern 23 verbunden. Die Leitschaufeln 21 besitzen jeweils eine Anströmkante 27 sowie eine Abströmkante 28. Vorzugsweise liegen die Anströmkanten 27 in einer Anströmebene, die sich senkrecht zu einer Längsmittelachse 29 des Mischers 19 erstreckt. Zusätzlich oder alternativ liegen die Abströmkanten 28 in einer Abströmebene, die sich senkrecht zur Längsmittelachse 29 erstreckt. Der Kern 23 kann nun wenigstens an einem Axialende des Mischers 19 axial über die Leitschaufeln 21 vorstehen. Im gezeigten Beispiel steht der Kern 23 über das dem Betrachter zugewandte anströmseitige Ende axial vor. Der Kern 23 besitzt hierbei ein strömlinienförmiges Anströmende.

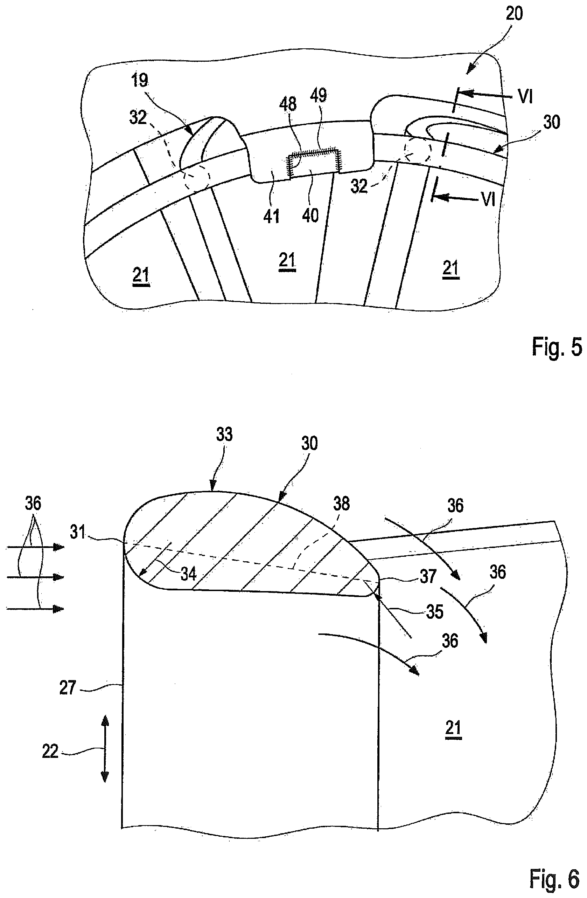

Bei den hier gezeigten bevorzugten Beispielen ist ein anströmseitiger Ring 30 vorgesehen. Dieser anströmseitige Ring 30 ist dabei im Bereich eines Außenumfangs des Mischers 19 bzw. im Bereich radial außenliegender Enden der Leitschaufeln 21 angeordnet. Ferner ist der anströmseitige Ring 30 im Bereich der Anströmkanten 27 angeordnet. Insbesondere ist der anströmseitige Ring 30 integral am vorgenannten Gussteil 24 ausgeformt. Wie sich Fig. 6 entnehmen lässt, kann der anströmseitige Ring 30 so in das Gussteil 24 integriert sein, dass eine Anströmkante 31 des anströmseitigen Rings 30 axial bündig zu den Anströmkanten 27 der Leitschaufeln 21 und/oder radial bündig zu einem radial außenliegenden Ende der jeweiligen Leitschaufel 21 angeordnet ist. Somit erstreckt sich der anströmseitige Ring 30 quasi durch die Leitschaufeln 21 in der Umfangsrichtung 22 hindurch, wodurch sich innerhalb des Gussteils 24 Knotenbereiche 32 ausbilden, die sowohl vom anströmseitigen Ring 30 als auch von der jeweiligen Leitschaufel 21 genutzt werden.

Gemäß Fig. 6 besitzt der anströmseitige Ring 30 zweckmäßig ein quer zur Umfangsrichtung 22 gemessenes Profil 33, das anströmseitig und abströmseitig gerundet ist. Dabei ist ein anströmseitiger Rundungsradius 34 deutlich größer als ein abströmseitiger Rundungsradius 35, wodurch eine Tropenform oder aerodynamische Form für das Profil 33 erzeugt wird. Insbesondere handelt es sich beim Profil 33 um ein Tragflügelprofil. Zweckmäßig ist das Profil 33 so gestaltet, dass es eine axial ankommende Abgasströmung 36 radial nach innen ablenken kann. Ein derartiges Szenario ist in Fig. 6 durch Pfeile angedeutet. Der abströmseitige Rundungsradius 35 definiert eine Abströmkante 37 des Profils 33, Das zuvor genannte Tragflügelprofil ergibt sich dann, wenn der radial innenliegende Weg von der Anströmkante 31 zur Abströmkante 37 entlang der Außenkontur des Profils 33 kürzer ist als der radial außenliegende Weg. Ferner ist eine Sehne 38, die die Anströmkante 31 mit der Abströmkante 37 innerhalb des Profils 33 verbindet, gegenüber der Axialrichtung angestellt, um die gewünschte Strömungsablenkung nach innen zu bewirken. Die Axialrichtung ist dabei durch die Längsmittelachse 29 des Mischers 19 definiert.

Gemäß der in Fig. 3 gezeigten Ausführungsform kann zusätzlich zum anströmseitigen Ring 30 außerdem ein abströmseitiger Ring 39 vorgesehen sein, der im Bereich der Abströmkanten 28 sowie im Bereich eines Außenumfangs des Mischers 19 bzw. im Bereich der radial außenliegenden Enden der Leitschaufeln 21 angeordnet ist. Auch hierbei ist es möglich, den abströmseitigen Ring 39 integral im Gussteil 24 auszuformen. Ferner kann eine Abströmkante des abströmseitigen Rings 39 bündig mit den Abströmkanten 28 der Leitschaufeln 21 und oder mit den radial außenliegenden Enden der Leitschaufeln 21 abschließen.

Am Gussteil 24 können Halteelemente 40 ausgebildet sein, über die der Mischer 19 mit Hilfe des zuvor genannten Halters 20 am Abgasrohr 14 befestigt werden kann. Bei den in den Fig. 2 und 3 gezeigten Ausführungsformen sind beispielhaft zwei derartige Halteelemente 40 vorgesehen, die radial nach außen abstehen und dabei jeweils von einer Leitschaufel 21 ausgehen können. Zweckmäßig sind die beiden Halteelemente 40 dabei einander diametral gegenüberliegend angeordnet. Mit Hilfe derartiger, radial abstehender Halteelemente 40 ist es grundsätzlich möglich, den Mischer 19 auch ohne Halter 20 unmittelbar am Abgasrohr 14 zu fixieren.

Im Unterschied dazu zeigen die Fig. 4 und 5 eine Ausführungsform, bei der exemplarisch drei Halteelemente 40 vorgesehen sind, die axial abstehen und dabei in der Umfangsrichtung 22 gleichförmig verteilt angeordnet sind. Die Halteelemente 40 sind dabei am anströmseitigen Ring 30 angeordnet bzw. daran integral ausgeformt. Bei diesen Halteelementen 40 kann zweckmäßig der zuvor genannte Halter 20 zum Einsatz kommen, der hierzu bspw. komplementär zu den Halteelementen 40 geformte und angeordnete Haltelaschen 41 aufweist, die eine feste Verbindung mit den Halteelementen 40 ermöglichen. Beispielsweise ist hier eine Rastverbindung denkbar, bei welcher die Halteelemente 40 mit den Haltelaschen 41 verrasten, um eine formschlüssige Verbindung in der Axialrichtung und der Radialrichtung zwischen dem Mischer 19 und dem Halter 20 zu schaffen. Ebenso ist es möglich, dass der Halter 20 im Bereich der Haltelaschen 41 mit den Halteelementen 40 verschweißt ist, um den Mischer 19 am Halter 20 zu fixieren. Ferner ist eine plastische Umformung der Haltelaschen 41 und/oder der Halteelemente 40 denkbar, um hier eine ausreichende Fixierung zwischen Mischer 19 und Halter 20 zu erzeugen.

Bevorzugt ist jedoch eine Ausführungsform, bei welcher das jeweilige Halteelement 40 mit der zugehörigen Haltelasche 41 verschweißt ist. Hierzu ist an der Haltelasche 41 gemäß Fig. 5 eine Aussparung 48 vorgesehen, in welche das Halteelement 40 formschlüssig einsetzbar ist. Die Aussparung 48 weist hierzu einen U-förmigen Querschnitt auf, der komplementär zum Querschnitt des Halteelements 40 geformt ist. Im Beispiel handelt es sich um einen Rechteckquerschnitt, der von einem Rand der Aussparung 48 an drei von vier Seiten eingefasst ist. Mittels eines Schweißvorgangs kann nun entlang des Rands der Aussparung 48 eine durchgehende Schweißnaht 49 erzeugt werden, um das Halteelement 40 mit der Haltelasche 41 zu verbinden. Besonders vorteilhaft hat sich hierbei die Verwendung eines Laserschweißverfahrens herausgestellt, um die jeweilige Schweißnaht 49 herzustellen.

Zur vereinfachten Herstellung der Schweißverbindung kann vorgesehen sein, dass zwischen dem Halteelement 40 und der Haltelasche 41 in der Aussparung 48 ein möglichst kleiner Spalt bzw. ein möglichst geringes Spiel entlang des Rands der Aussparung 48 vorhanden ist. Bevorzugt ist eine Ausführungsform, bei welcher das Halteelement 40 spielfrei bzw. spaltfrei in die Aussparung 48 eingreift, so dass der Rand der Aussparung 48 im Wesentlichen vollständig am Halteelement 40 anliegt. Im Beispiel liegt dann der Rand der Aussparung 48 an drei Seiten am Halteelement 40 an. Ein spielfreier Eingriff des Halteelements 40 in die Aussparung 48 lässt sich vorteilhaft dadurch erreichen, dass die Aussparung 48 mit enger Toleranz hergestellt wird und dass dabei eine Entformungsschräge des Gussteils 24 im Bereich des Halteelements 40 berücksichtigt wird. Somit lässt sich das Halteelement 40 einfach soweit in die Aussparung 48 einführen, bis es entlang des Rands der Aussparung 48 an der Haltelasche 41 anliegt. Die Entformungsschräge wirkt dabei als Zentrierung. Der spielfreie Eingriff des Halteelements 40 in die Aussparung 48 ermöglicht in Verbindung mit einem Laserschweißverfahren eine besonders hochwertige und einfach herstellbare Verbindung zwischen Halteelement 40 und Haltelasche 41.

Wie sich insbesondere den Fig. 4 und 5 entnehmen lässt, können die Haltelaschen 41 bei dem hier gezeigten bevorzugten Beispiel radial nach innen von einem Ringbereich 42 des im Übrigen scheibenförmigen Halters 20 abstehen. Insbesondere diese Bauweise ermöglicht es, den Mischer 19 im Abgasrohr 14, das in Fig. 4 mit unterbrochener Linie angedeutet ist, so zu halten, dass sich radial zwischen dem Mischer 19 und einer Innenwand 43 des Abgasrohrs 14 ein Ringspalt 44 ausbilden kann, der den Mischer 19 in der Umfangsrichtung 22 vollständig und geschlossen umgibt. Somit gibt es keinen radialen Kontakt zwischen Mischer 19 und Abgasrohr 14. Gleichzeitig wird dadurch erreicht, dass der anströmseitige Ring 30 radial außen umströmbar ist. Auch die Leitschaufeln 21, die radial außen freistehend angeordnet sind, sind dadurch radial außen umströmbar. Insgesamt ergibt sich für den Mischer 19 dadurch ein besonders niedriger Durchströmungswiderstand.

Ein Verfahren zum Herstellen der Mischeinrichtung 12 für die Abgasanlage 7, wobei die Mischeinrichtung 12 zumindest das Abgasrohr 14, dessen Innenwand 43 den vom Abgasstrom 8 durchströmbaren Querschnitt radial begrenzt, den Mischer 19 zum Durchmischen und/oder Verdampfen der Flüssigkeit 13 im Abgasstrom 8 und den separaten Halter 20 zum Fixieren des Mischers 19 am bzw. im Abgasrohr 14 aufweist, läuft demnach wie folgt ab:
Zunächst werden der Mischer 19 und der Halter 20 hergestellt. Dabei wird der Mischer 19 als Gussteil 24 aus einem metallischen Gusswerkstoff ausgestaltet, derart, dass das Gussteil 24 zumindest ein solches Halteelement 40 als integral daran ausgeformten Bestandteil aufweist. Im Unterschied dazu wird der Halter 20 als Blechteil aus einem metallischen Blechwerkstoff ausgestaltet, derart, dass das Blechteil zumindest eine solche Haltelasche 41 als integral daran ausgeformten Bestandteil aufweist. Anschließend werden das Gussteil 24 und der Halter 20 relativ zueinander so positioniert, dass das jeweilige Halteelement 40 in die jeweilige Haltelasche 41 eingreift. Insbesondere greift hierbei das jeweilige stegförmige Halteelement 40 formschlüssig und spielfrei in die Aussparung 48 der jeweiligen Haltelasche 41 ein. Schließlich wird das jeweilige Halteelement 40 mit der jeweiligen Haltelasche 41 verschweißt, derart, dass der Gusswerkstoff aufschmilzt und sich direkt mit dem Blechwerkstoff verbindet. Das Schweißverfahren wird somit ohne die Verwendung einen Schweißzusatzstoffes durchgeführt.

Wie sich Fig. 4 außerdem entnehmen lässt, kann der Halter 20 besonders einfach in die zuvor genannte erste Flanschverbindung 15 integriert werden. Insbesondere können dabei am Halter 20 Durchgangsöffnungen 45 vorgesehen sein, die von hier nicht gezeigten Schrauben durchsetzt werden können, mit denen die Flansche des Abgasrohrs 14 und des Rohrstücks 16 innerhalb der ersten Flanschverbindung 15 aneinander fixiert werden.

Gemäß Fig. 2 sind bei den Leitschaufeln 21 die Abströmkanten 28 jeweils in einem Endbereich 46 ausgebildet, der von einem stromauf daran anschließenden Bereich 47 der jeweiligen Leitschaufel 21 abgewinkelt ist. Insbesondere erfolgt die Abwinklung dabei in einer Richtung, die entgegengesetzt zum Anstellwinkel des daran anschließenden Bereichs 47 orientiert ist. Insbesondere kann der Endbereich 46 axial ausgerichtet sein, also einen Anstellwinkel von 0° besitzen. Vorzugsweise ist bei allen Leitschaufeln 21 die Abströmkante 28 an einem derartigen abgewinkelten Endbereich 46 ausgebildet.

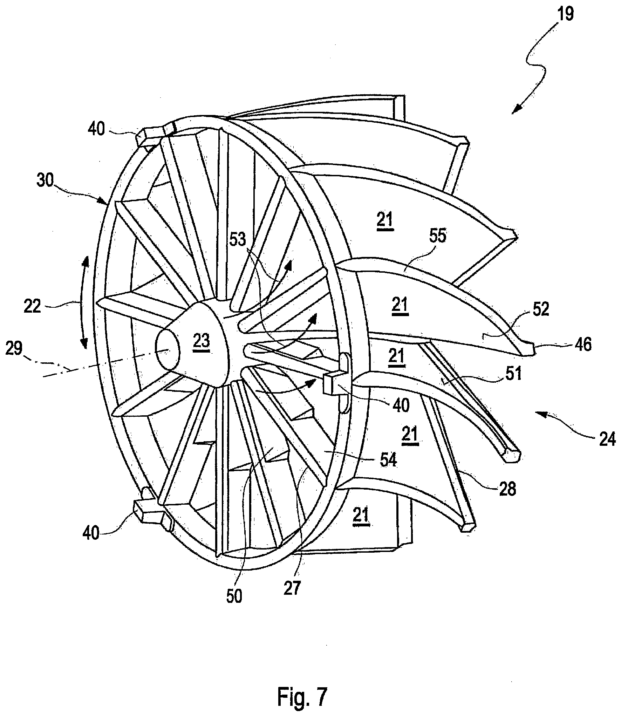

Gemäß Fig. 7 sind einige, vorzugsweise alle, Leitschaufeln 21 jeweils mit einer Zusatzleitkontur 50 ausgestattet, die an einer Abströmfläche 51 der jeweiligen Leitschaufel 21 im Bereich der Anströmkante 27 der jeweiligen Leitschaufel 21 angeordnet sind. Die Zusatzleitkonturen 50 sind hierzu so angeordnet, dass sie im Betrieb des Mischers 19 bzw. im Betrieb der mit dem Mischer 19 ausgestatteten Abgasanlage 7 eine Abgasströmung von der jeweiligen Leitschaufel 21 in der Umfangsrichtung 22 gegen die jeweils benachbarte Leitschaufel 21 ablenken. Strömungspfeile, welche diese Ablenkung symbolisieren, sind dabei in Fig. 7 mit 53 bezeichnet.

Die Zusatzleitkonturen 50 stehen dabei von der Abströmfläche 51 der jeweiligen Leitschaufel 21 rampenförmig in Richtung einer Anströmfläche 52 der in Umfangsrichtung 22 benachbarten Leitschaufel 21 ab. Die Abströmfläche 51 der jeweiligen Leitschaufel 21 ist diejenige Fläche der Leitschaufel 21, die im Betrieb des Mischers 19 bzw. im Betrieb der mit dem Mischer 19 ausgestatteten Abgasanlage 7 von einer ankommenden Abgaströmung abgewandt ist, also diesbezüglich leeseitig angeordnet ist. Im Unterschied dazu ist die Anströmfläche 52 der jeweiligen Leitschaufel 21 durch diejenige Fläche der Leitschaufel 21 gebildet, die besagter ankommender Abgasströmung zugewandt ist, also diesbezüglich luvseitig angeordnet ist. Bekanntermaßen ist die Leeseite im Schatten der ankommenden Strömung angeordnet, während die Luvseite der ankommenden Strömung direkt ausgesetzt ist.

Zweckmäßig sind die Zusatzleitkonturen 50 nur in einem radial innenliegenden Bereich der jeweiligen Leitschaufel 21 angeordnet. Im Beispiel schließen die Zusatzleitkonturen 50 an den Kern 23 an und erstrecken sich über etwa 50% der radialen Abmessung der jeweiligen Leitschaufel 21. Vorzugsweise liegt der Bereich, über den sich die jeweilige Zusatzleitkontur 50 ausgehend vom Kern 23 entlang der jeweiligen Leitschaufel 21 erstreckt, zwischen 30% und 70%, insbesondere zwischen 40% und 60%, der radialen Abmessung der jeweiligen Leitschaufel 21. Die Rampenform der jeweiligen Zusatzleitkontur 50 ist im Profil, keilförmig ausgestaltet, derart, dass es zum anströmseitigen axialen Ende des Mischers 19 spitz zuläuft.

In der Axialrichtung erstreckt sich die jeweilige Zusatzleitkontur 50 nur in einem an die Anströmkante 27 der jeweiligen Leitschaufel 21 angrenzenden Axialabschnitt 54 der jeweiligen Leitschaufel 21. In diesem anströmseitigen Axialabschnitt 54 kann die jeweilige Leitschaufel 21 gemäß einer bevorzugten Ausführungsform noch ohne Anstellung gegenüber der Axialrichtung sein, so dass sich dieser Axialabschnitt 54 parallel zur Längsmittelachse 29 erstreckt. Erst in einem an diesen Axialabschnitt 54 anschließenden gekrümmten Bereich 55 besitzt die jeweilige Leitschaufel 21 eine Anstellung, also einen von Null verschiedenen Ansstellwinkel gegenüber der Axialrichtung. Im Beispiel stimmt die axiale Erstreckung des anströmseitigen Axialabschnitts 54 mit der axialen Erstreckung des anströmseitigen Rings 30 überein.

## Patentansprüche

1. Mischer für eine Abgasanlage (7) zum Durchmischen und/oder Verdampfen einer Flüssigkeit (13) in einem Abgasstrom (8), insbesondere für ein SCR-System (9), mit mehreren sternförmig angeordneten Leitschaufeln (21), wobei die Leitschaufeln (21) jeweils radial innen mit einem zentral angeordneten Kern (23) verbunden sind und die Leitschaufeln (21) und der Kern (23) durch ein integrales Gussteil gebildet sind,
**dadurch gekennzeichnet,**
**dass** wenigstens bei einer Leitschaufel (21) eine Abströmkante (28) an einem Endbereich (46) ausgebildet ist, der gegenüber einem stromauf daran anschließenden Bereich (47) der jeweiligen Leitschaufel (21) derart abgewinkelt ist, dass der Endbereich (46) einen kleineren Anstellwinkel aufweist, als der stromauf daran anschließende Bereich der Leitschaufel.

2. Mischer nach Anspruch 1, **dadurch gekennzeichnet, dass** die Leitschaufeln (21) radial außen freistehend angeordneten sind.

3. Mischer nach Anspruch 1 oder 2, **dadurch gekennzeichnet, dass** der Kern (23) einen Durchmesser (25) aufweist, der größer ist als eine Wandstärke (26) einer der Leitschaufeln (21).

4. Mischer nach einem der vorhergehenden Ansprüche, **dadurch gekennzeichnet, dass** die Leitschaufeln (21) jeweils über ihre gesamte axiale Länge mit dem Kern (23) verbunden sind.

5. Mischer nach einem der vorhergehenden Ansprüche, **dadurch gekennzeichnet, dass** der Kern (23) an wenigstens einem axialen Ende des Mischers (19) axial über die Leitschaufeln (21) vorsteht.

6. Mischer nach einem der vorhergehenden Ansprüche, **dadurch gekennzeichnet, dass** ein anströmseitiger Ring (30) vorgesehen ist, der mit allen Leitschaufeln (21) an deren Anströmkante (27) verbunden ist.

7. Mischer nach Anspruch 6, **dadurch gekennzeichnet, dass** der anströmseitige Ring (30) integral am Gussteil (24) ausgebildet ist.

8. Mischer nach Anspruch 6 und Anspruch 7, **dadurch gekennzeichnet, dass** der anströmseitige Ring (30) quer zur Umfangsrichtung (22) ein Profil (33) besitzt, das anströmseitig oder abströmseitig gerundet ist und anströmseitig einen größeren Rundungsradius (34, 35) aufweist als abströmseitig.

9. Mischer nach einen der vorhergehenden Ansprüche, **dadurch gekennzeichnet, dass** ein abströmseitiger Ring (39) vorgesehen ist, der mit allen Leitschaufeln (21) an deren Abströmkante (28) verbunden ist

10. Mischer nach einem der vorhergehenden Ansprüche, **dadurch gekennzeichnet, dass** am Gussteil (24) Halteelemente (40) ausgebildet sind, über die der Mischer (19) mittels eines separaten Halters (20) an einem Abgasrohr (14) befestigbar ist.

11. Mischer nach den Ansprüchen 10 und 6, **dadurch gekennzeichnet, dass** die Halteelemente (40) am anströmseitigen Ring (30) ausgebildet sind.

12. Mischer nach Anspruch 10 oder 11, **dadurch gekennzeichnet, dass** das jeweilige Halteelement (40) mit einer am Halter (20) ausgebildeten Haltelasche (41) durch eine mittels eines Laserschweißverfahrens hergestellte Schweißnaht (49) fest verbunden ist.

13. Mischer nach einem der Ansprüche 10 bis 12, **dadurch gekennzeichnet, dass** der Halter (20) für das jeweilige Halteelement (40) eine Haltelasche (41) aufweist, an der eine Aussparung (48) ausgebildet ist, in welche das Halteelement (40) spielfrei eingesetzt ist

14. Mischer nach einem der vorhergehenden Ansprüche, **dadurch gekennzeichnet, dass** der Endbereich (46) einen Anstellwinkel von 0° besitzt.

15. Mischer nach einem der vorhergehenden Ansprüche, **dadurch gekennzeichnet, dass** wenigstens eine der Leitschaufeln (21) eine Zusatzleitkontur (50) aufweist, die an einer Abströmfläche (51) der jeweiligen Leitschaufel (21) im Bereich einer Anströmkante (27) der jeweiligen Leitschaufel (21) angeordnet ist und in Richtung einer Anströmfläche (52) der in Umfangsrichtung (22) benachbarten Leitschaufel (21) absteht.

16. Mischer nach Anspruch 15, **dadurch gekennzeichnet, dass** die jeweilige Zusatzleitkontur (50) nur in einem radial innenliegenden Bereich der jeweiligen Leitschaufel (21) angeordnet ist.

17. Mischeinrichtung für eine Abgasanlage (7),
- mit einem Abgasrohr (14), dessen Innenwand (43) einen von einem Abgasstrom (8) durchströmbaren Querschnitt radial begrenzt,
- mit einem Mischer (19) nach einem der vorhergehenden Ansprüche,
- mit einem separaten Halter (20), mit dem der Mischer (19) am Abgasrohr (14) befestigt ist.

18. Mischeinrichtung nach Anspruch 17, **dadurch gekennzeichnet, dass** der Mischer (19) derart mit dem Halter (20) am Abgasrohr (14) befestigt ist, dass ein Ringspalt (44) radial zwischen dem Mischer (19) und der Innenwand (43) ausgebildet ist.

19. Mischeinrichtung Anspruch 17 oder 18, **dadurch gekennzeichnet, dass** der Halter (20) in eine Flanschverbindung (15) eingesetzt ist, mit der das Abgasrohr (14) im Einbauzustand an eine andere Komponente (16) der Abgasanlage (7) angeschlossen ist.

## Claims

1. Mixer for an exhaust gas system (7) for mixing and/or evaporating a liquid (13) in an exhaust gas flow (8), in particular for an SCR system (9), with several guide blades (21) arranged in a star shape, wherein the guide blades (21) are connected radially inwards with a centrally arranged core (23) and wherein the guide blades (21) and the core (23) are formed by an integral cast part, **characterized in that**
at least at one guide blade (21) a trailing edge (28) is formed at an end region (46) which in relation to an upstream adjacent region (47) of the respective guide blade (21) is angled so that the end region (46) has a smaller blade angle than the upstream adjacent region of the guide blade.

2. Mixer according to claim 1, **characterized in that** radially at the outside the guide blades (21) are arranged freestanding.

3. Mixer according to claim 1 or 2, **characterized in that** the core (23) has a diameter (25) which is bigger than a wall thickness (26) of one of the guide blades (21).

4. Mixer according to one of the preceding claims, **characterized in that** the guide blades (21) are connected to the core (23) across their entire axial length.

5. Mixer according to one of the preceding claims, **characterized in that** at at least one axial end of the mixer (19) the core (23) protrudes axially over the guide blades (21).

6. Mixer according to one of the preceding claims, **characterized in that** a ring (30) is provided on the upstream side which is connected to all guide blades (21) at their leading edge (27).

7. Mixer according to claim 6, **characterized in that** the ring (30) on the upstream side is integral with the cast part (24).

8. Mixer according to claim 6 and claim 7, **characterized in that** transverse to the circumferential direction (22) the ring (30) on the upstream side has a profile (33) which is rounded on the upstream side or on the downstream side and which has a larger rounding radius (34, 35) on the upstream side than on the downstream side.

9. Mixer according to one of the preceding claims, **characterized in that** a ring (39) is provided on the downstream side which is connected to all guide blades (21) at their trailing edge (28).

10. Mixer according to one of the preceding claims, **characterized in that** the holding elements (40) are provided at the cast part (24) via which the mixer (19) can be attached to an exhaust pipe (14) by means of a separate holder (20).

11. Mixer according to claims 10 and 6, **characterized in that** the holding elements (40) are formed at the ring (30) on the upstream side.

12. Mixer according to claim 10 or 11, **characterized in that** the respective holding element (40) is firmly connected to a holding tab (41) formed at the holder (20) by means of a welding seam (49) realized by means of a laser welding process.

13. Mixer according to one of claims 10 to 12, **characterized in that** the holder (20) comprises a holding tab (41) for the respective holding element (40) where a recess (48) is formed into which the holding element (40) is inserted with no play.

14. Mixer according to one of the preceding claims, **characterized in that** the end region (46) has a 0° blade angle.

15. Mixer according to one of the preceding claims, **characterized in that** at least one of the guide blades (21) comprises an additional guide contour (50) which is arranged at a downstream surface (51) of the respective guide blade (21) in the area of a leading edge (27) of the respective guide blade (21) and projects in the direction of an upstream surface (52) of the adjacent guide blade (21) in the circumferential direction (22).

16. Mixer according to claim 15, **characterized in that** the respective additional guide contour (50) is only arranged in a radially inner region of the respective guide blade (21).

17. Mixing device for an exhaust gas system (7),
- with an exhaust gas tube (14) whose inner wall (43) radially limits a cross section through which an exhaust gas flow (8) may pass,
- with a mixer (19) according to one of the preceding claims,
- with a separate holder (20) by which the mixer (19) is attached to the exhaust pipe (14).

18. Mixing device according to claim 17, **characterized in that** the mixer (19) is attached to the exhaust pipe (14) by the holder (20) in such a way that an annular gap (44) is formed radially between the mixer (19) and the inner wall (43).

19. Mixing device according to claim 17 or 18, **characterized in that** the holder (20) is inserted into a flange connection (15) by which the exhaust pipe (14) is connected to another component (16) of the exhaust gas system (7) in the mounting state.

## Revendications

1. Mélangeur pour un système d'échappement (7) pour mélanger et/ou évaporer un liquide (13) dans un flux de gaz d'échappement (8), en particulier pour un système SCR (9) avec plusieurs aubes de guidage (21) disposées en étoile, les aubes de guidage (21) étant connectées radialement à l'intérieur avec un noyau (23) disposé centralement et les aubes de guidage (21) et le noyau (23) étant formés par une pièce moulée intégrale,
**caractérisé en ce que**
au moins chez une aube de guidage (21) un bord de fuite (28) est formé à une région d'extrémité (46) qui, par rapport à une région (47) adjacente en amont de l'aube de guidage (21) respective est incliné de sorte que la région d'extrémité (46) a un plus petit angle d'attaque que la région adjacente en amont de l'aube de guidage.

2. Mélangeur selon la revendication 1, **caractérisé en ce que** les aubes de guidage (21) sont arrangées libres radialement à l'extérieur.

3. Mélangeur selon les revendications 1 ou 2, **caractérisé en ce que** le noyau (23) a un diamètre (25) qui est plus grand qu'une épaisseur du mur (26) d'une des aubes de guidage (21).

4. Mélangeur selon une des revendications précédentes, **caractérisé en ce que** les aubes de guidage (21) sont connectées au noyau (23) sur toute leur longueur axiale.

5. Mélangeur selon une des revendications précédentes, **caractérisé en ce que** le noyau (23) fait saillie axialement par rapport aux aubes de guidage (21) à au moins une extrémité axiale du mélangeur (19).

6. Mélangeur selon une des revendications précédentes, **caractérisé en ce qu'**un anneau (30) est prévu sur le côté amont qui est lié à toutes les aubes de guidage (21) à leur bord d'attaque (27).

7. Mélangeur selon la revendication 6, **caractérisé en ce que** l'anneau (30) sur le côté amont est formé intégralement à la pièce moulée (24).

8. Mélangeur selon la revendication 6 et la revendication 7, **caractérisé en ce que** l'anneau (30) sur le côté amont possède dans une direction transversale à la direction circonférentielle (22) un profil (33) qui est arrondi sur le côté amont ou aval et qui a un plus grand rayon de courbure (34, 35) sur le côté amont que sur le côté aval.

9. Mélangeur selon une des revendications précédentes, **caractérisé en ce qu'**un anneau (39) est prévu sur le côté aval qui est lié à toutes les aubes de guidage (21) à leur bord de fuite (28).

10. Mélangeur selon une des revendications précédentes, **caractérisé en ce que** des éléments de support (40) sont formés à la pièce moulée (24) par lesquels le mélangeur (19) peut être attaché à un tuyau d'échappement (14) par un support (20) séparé.

11. Mélangeur selon les revendications 10 et 6, **caractérisé en ce que** les éléments de support (40) sont formés à l'anneau (30) sur le côté amont.

12. Mélangeur selon la revendication 10 ou 11, **caractérisé en ce que** l'élément de support (40) respectif est fermement relié à une languette de retenue (41) formée au support (20), via une soudure (49) réalisée par une méthode de soudage par laser.

13. Mélangeur selon une des revendications 10 à 12, **caractérisé en ce que** le support (20) comprend une languette de retenue (41) pour l'élément de support (40) respectif, à laquelle une encoche (48) est formée dans laquelle l'élément de support (40) est inséré sans jeu.

14. Mélangeur selon une des revendications précédentes, **caractérisé en ce que** la région d'extrémité (46) a un angle d'attaque de 0°.

15. Mélangeur selon une des revendications précédentes, **caractérisé en ce qu'**au moins une des aubes de guidage (21) comprend un contour de guidage supplémentaire (50) qui est arrangé à une surface aval (51) de l'aube de guidage (21) respective dans la région d'un bord d'attaque (27) de l'aube de guidage (21) respective et fait saillie dans la direction d'une surface amont (52) de l'aube de guidage (21) adjacente dans la direction circonférentielle (22).

16. Mélangeur selon la revendication 15, **caractérisé en ce que** le contour de guidage supplémentaire (50) respectif est arrangé seulement dans une région radialement intérieure de l'aube de guidage (21) respectif.

17. Dispositif de mélange pour un système d'échappement (7),
- avec un tuyau d'échappement (14), dont la paroi intérieure (43) limite radialement une section à travers laquelle un flux de gaz d'échappement (8) peut circuler,
- avec un mélangeur (19) selon une des revendications précédentes,
- avec un support séparé (20) par lequel le mélangeur (19) est attaché au tuyau d'échappement (14).

18. Dispositif de mélange selon la revendication 17, **caractérisé en ce que** le mélangeur (19) est attaché au tuyau d'échappement (14) par le support (20) de sorte qu'une fente annulaire (44) est formée radialement entre le mélangeur (19) et la paroi intérieure (43).

19. Dispositif de mélange selon la revendication 17 ou 18, **caractérisé en ce que** le support (20) est inséré dans un raccord à bride (15) par lequel le tuyau d'échappement (14) est connecté à un autre composant (16) du système d'échappement (7) à l'état monté.
